# EUROPEAN PATENT APPLICATION

(11) **EP 2 605 456 A1**
(43) Date of publication of application: **19.06.2013**
(21) Application number: 11250927.8
(22) Date of filing: 13.12.2011
(51) Int. Cl.: H04L 12/28

(54) **Network termination equipment**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

The present invention provides an improved network termination equipment (NTE). The NTE of the present invention comprises a VDSL modem such that telephony signals and data signals can be transmitted together over conventional telephone wiring, without the need to install data cabling. This makes installation of super-fast broad band services faster and cheaper and makes them less visually intrusive.

## Description

The present invention relates to network termination equipment, and in particular to network termination equipment that can be used with high data rate services, such as those provided by fibre to the cabinet (FTTCab) networks.

Asymmetric digital subscriber line (ADSL) systems enable data to be transmitted over a pair of metallic twisted pair (usually copper) wires to customer premises. It is though that the maximum transmission performance that is likely to be obtained with modern variants of ADSL is a download data rate of 24 Mbps and an upload speed of about 3 Mbps. Such data rates are dependent on the length of the metallic twisted pair from the customer premises to the telephone exchange and thus many customers will receive services at significantly lower data rates.

To improve data rates optical fibre has been installed into the access network. The greatest data rates are likely to be provided using fibre to the premises (FTTP) networks, such as passive optical networks (PONs) but there is a significant cost involved in providing fibre to customer premises. Fibre to the cabinet (FTTCab) networks are known to provide an attractive solution to providing customers with high data rate services without requiring as much investment as FTTP networks. Typically in FTTCab networks, very high bit-rate digital subscriber line (VDSL) systems are used to provide data rates of 40 Mbps and higher, for both upload and download on the metallic twisted pair cables. It is believed that improvements to VDSL systems may provide data rates in excess of 100 Mbps.

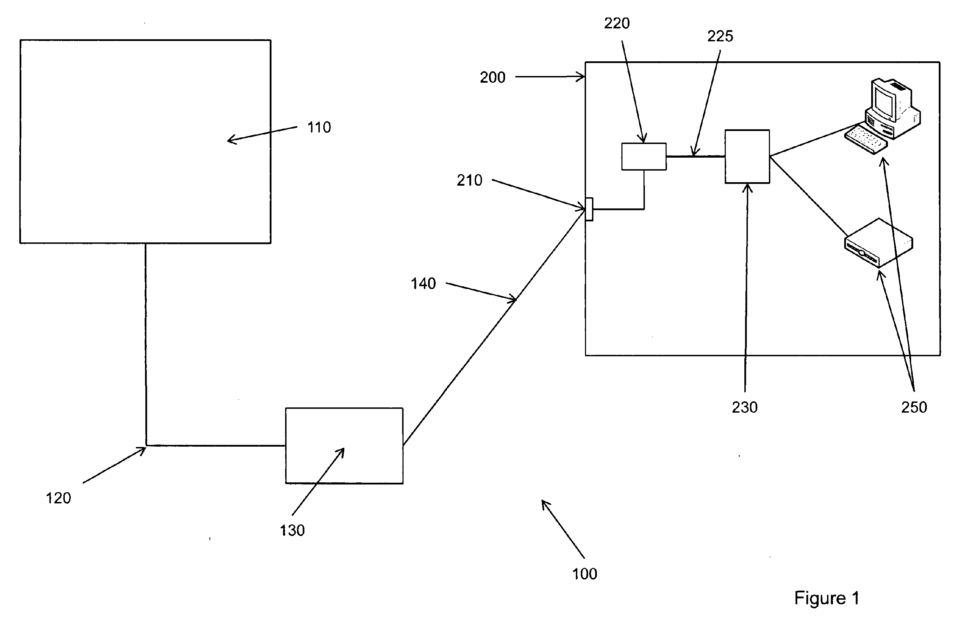

Figure 1 shows a schematic depiction of a conventional FTTCab network 100 supporting a VDSL system. Transmission equipment in the telephone exchange 110 is connected to a cabinet 130 (conventionally located by the roadside but which could alternatively be located underground or within a building or other structure) by optical fibre cable 120 and optical signals are transmitted to the cabinet. At the cabinet the transmission signals undergo an opto-electrical conversion process and a VDSL signal is sent to the customer premises 200 via the metallic cable 140. Telephony signals may be sent to and from the customer using the original copper access network or alternatively the telephony signal may be sent via the cabinet as a component, or payload, of the optical signals.

At the customer premises 200 the metallic cable 140 is terminated at network termination equipment (NTE) 210. The NTE provides an interface to allow a telephone (not shown) to be plugged in, along with a filter (also not shown) to separate the telephony signal from the VDSL signals. A data socket is also connected to the filter which is connected to a VDSL modem 220. The VDSL modem 220 is connected in turn to a router or gateway/hub 230 via a data grade cable 225, which is typically a Cat 5 data cable. The router 230 provides onward communication to one or more devices 250, such as a personal computer or a set top box, either via a wireless connection or a further data grade cable. Both the VDSL modem 220 and the router 230 require connection to a power source so it is necessary for the customer to have a double socket or extension lead available near to the NTE. Whereas in commercial or business premises it is commonplace to design or provide suitable communications rooms or areas, in domestic premises it is often inconvenient or unsightly to have to locate so many devices near to the NTE and to have to provide them with electrical power. Although it is possible to have the VDSL modem 220 and the router 230 installed in different locations it then becomes necessary to provide a data grade cable connection between them.

According to a first aspect of the present invention there is provided a network termination apparatus comprising: a network interface configured to, in use, receive a telephony signal and a data signal; a splitter configured, in use, to i) separate the telephony signal from the data signal; ii) route the telephony signal to an internal wiring interface; iii) route the data signal to a first data modem; the first data modem being configured, in use, to demodulate the received data signal; characterised in that, in use, the telephony signal and the output of the first data modem are combined at the internal wiring interface such that they are transmitted together.

Preferably the apparatus further comprises a second data modem, the second data modem being arranged to i) receive the output of the first data modem; and ii) modulate the output received from first data modem before transmitting the modulated signal to the internal wiring interface for combination with the telephony signal. The first data modem and the second data modem may use different modulation schemes. For example, the first data modem may comprise a VDSL modem and the second data modem may comprises a home networking protocol modulator.

According to a second aspect of the present invention there is provided a method of transmitting signals, the method comprising the steps of: a) receiving a telephony signal and a data signal from a communications network; b) separating the telephony signal from the data signal such that: i) the telephony signal is routed to an internal wiring interface; ii) the data signal is routed to a first data modem; c) demodulating the received data signal at the first data modem; the method being characterised by the further step of; d) combining the telephony signal and the output of the first data at the internal wiring interface such that they are transmitted together.

The method may comprise the further steps of; e) receiving the output of the first data modem at a second data modem; f) modulating the output of the first data modem with the second data modem, steps e) and f) being carried out after step c) and before step d).

According to a third aspect of the present invention there is provided a communications network comprising: a network cable, a network terminating apparatus, internal wiring and a router, wherein in use; a telephony signal and a data signal are transmitted over the network cable to the network terminating apparatus, the network terminating apparatus comprising a first data modem; the network terminating apparatus being configured to: a) separate the telephony signal from the data signal; b) demodulate the data signal using a first data modem; c) transmit the telephony signal with the output of the first data modem over the internal wiring to the router. The router may comprise a splitter to separate the telephony signal from the output of the first data modem.

Preferably the network terminating apparatus comprises a second data modem, the network terminating apparatus being further configured to modulate the output of the first data modem before it is transmitted over the internal wiring to the router. Accordingly, the router comprises a splitter to separate the telephony signal from the output of the first data modem and a data modem to demodulate the output of the first data modem.

According to a fourth aspect of the present invention there is provided a transceiver for use with the modem, the transceiver comprising a network interface to receive the internal wiring, a splitter configured, in use, to route the telephony signal to a telephony port and to route the data signal to a data modem. The data modem may be connected to a data port and a power port. Furthermore, one or more of the data port and the power port are connected to a router.

Embodiments of the present invention will now be described, by way of example only, with reference to the accompanying drawings in which:
Figure 1 shows a schematic depiction of a conventional FTTCab network supporting a VDSL system;
Figure 2 shows a schematic depiction of an apparatus according to the present invention;
Figure 3 shows a schematic depiction of an apparatus according to the present invention;
Figure 4a shows a schematic depiction of the signals transmitted over the electrical cable;
Figure 4b shows a schematic depiction of the signals transmitted over the home wiring; and
Figure 5 shows a schematic depiction of the router home networking transceiver.

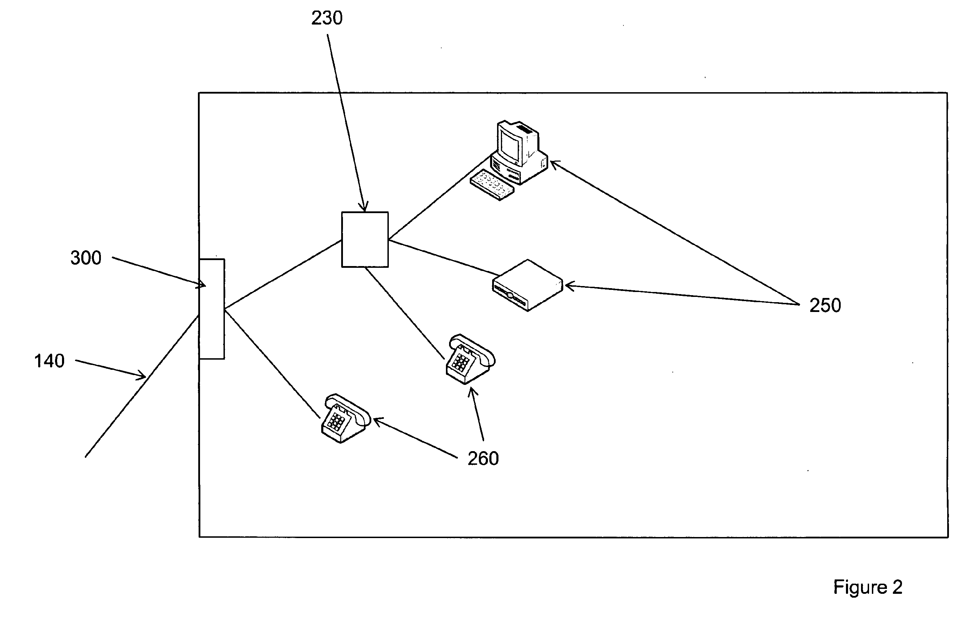

Figure 2 shows a schematic depiction of an apparatus according to the present invention. The metallic cable 140 from the network is terminated at an enhanced NTE 300 which provides both data and telephony signals over conventional telephony internal wiring. Thus, the router may be located near to the router or may be located elsewhere. The cables used to provide the internal wiring are physically smaller than Cat 5 data grade cables, making it easier to route the cabling around skirting boards, etc., and having less of a visual impact than using Cat 5 cables. The structure and operation of the enhanced NTE will now be described below in greater detail.

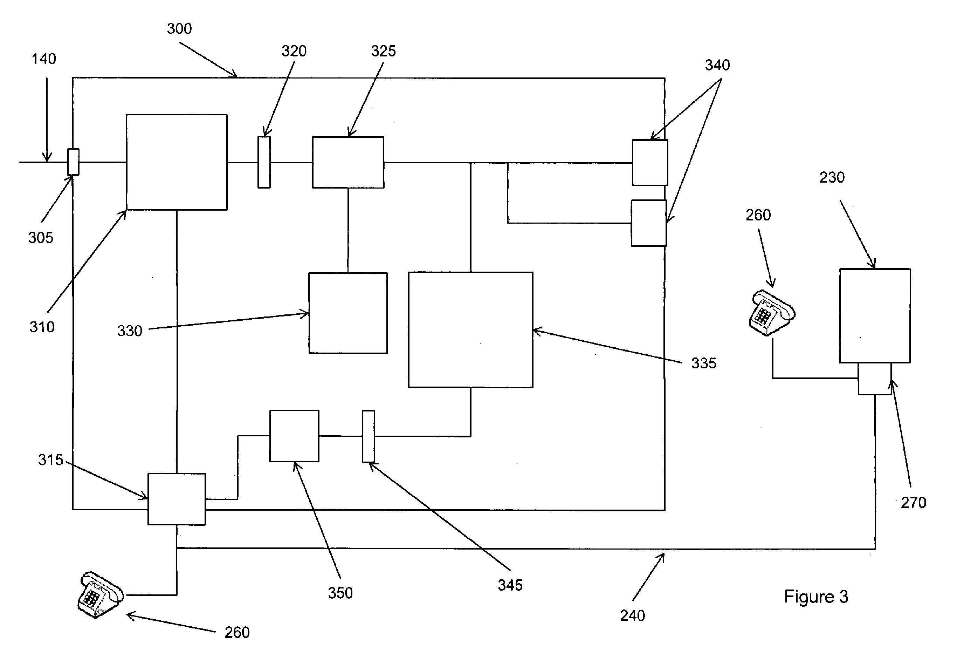

Figure 3 shows a schematic depiction of an apparatus according to the present invention. The enhanced NTE 300 comprises a splitter 310 which receives the analogue telephony and VDSL signals from the electrical cable 140. The splitter filters the signals so as to separate the low-frequency telephony signal from the high-frequency VDSL signals. The telephony signal is routed to a home wiring interface 315. The VDSL signals are routed to a VDSL system on a chip (SOC) 325 via a line interface 320. The line interface 320 filters out any DC components that might be present on the electrical cable 140 and reduces the voltages of the VDSL signals such that they can be processed by the VDSL SOC. An example of such a VDSL SOC is the Broadcom BCM63168 but those skilled in the art will be aware that other VDSL SOCs may be used. The output of the VDSL SOC, which is the payload of the data received over the electrical cable 140, is then forwarded to a home networking transceiver 335. The home networking transceiver will encode the data received from the VDSL SOC using an appropriate protocol, such as the ITU G.hn specification which defines networking over power lines, phone lines and coaxial cables with data rates up to 1 Gbps. An example of a suitable home networking transceiver is the Marvell 88LX3142 which implements the G.hn specification, although it will be understood by those skilled in the art that alternative home networking transceivers may be used. The data transmitted by the home networking transceiver 335 is passed through a line interface 345 so that it can be transmitted over the home wiring and the data is then routed to the home wiring interface 315. The VDSL SOC may require the provision of extra circuitry 330 which may comprise RAM, non-volatile data storage (such as ROM or flash memory), and/or a network processor. A filter 350 may be provided between line interface 350 and the home wiring interface 315 to prevent high-frequency interference and noise associated with the home networking transceiver from leaking through to the access network via the splitter 310.

The telephony signal and the home networking data signal are then transmitted over the home wiring 240 to the router 230. The router 230 comprises a home networking transceiver 270 such that the data transmitted over the home wiring can be received by the router home networking transceiver and processed into a format, for example Fast Ethernet or Gigabit Ethernet packets, that can be received by and processed by the router. The data that is received by the router 230 is then forwarded on to the respective destination communication device 250.

If one of the communication devices 250 needs to transmit data to the internet or a remote device then the data will be sent to the router 230; encoded by the router home networking transceiver 270 into a home networking data signal; transmitted over the home wiring to the home wiring interface; forwarded to the home networking transceiver 335; the data decoded from the home networking data signal and sent to the VDSL SOC where it is encoded as a VDSL signal for transmission over the electrical cable to the exchange, via splitter 310.

It is believed that an NTE according to the present invention will require around 6W of electrical power to operate it. It is believed that as chip sets are improved that this power requirement will drop and once the power requirement is around 2-3W then it will be possible to power the NTE by sending power over the electrical cable 140 from the cabinet. If network-based powering is not feasible then it will be necessary to power the NTE, either directly or indirectly from a mains supply in the customer premises. Even if such a decrease in electrical power consumption is not achieved, it would still possible for the NTE to be powered using power supplied by the network using other techniques, for example, the methods described in the Applicant's earlier inventions such as, EP-B-2 140 675 or WO2005/043880.

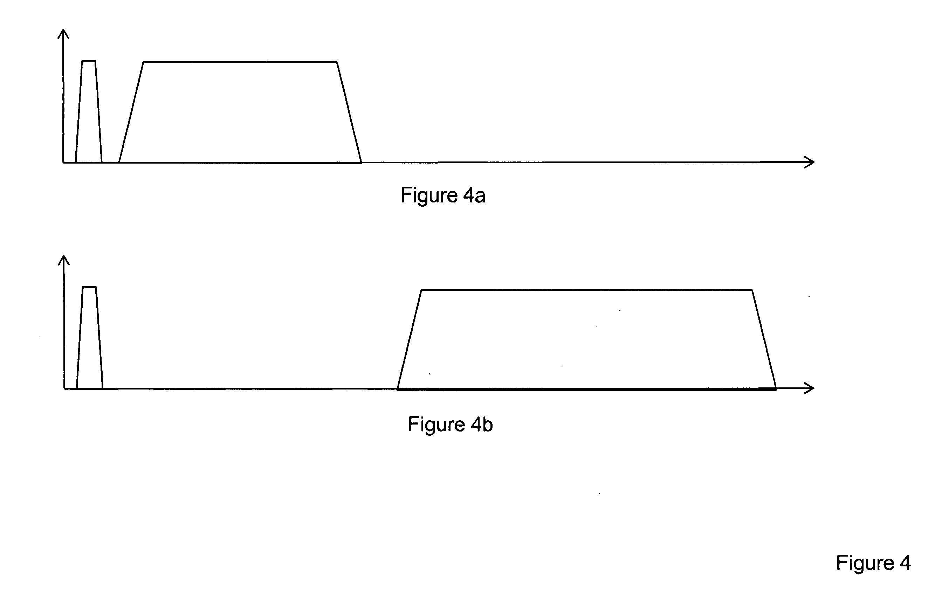

Figure 4a shows a schematic depiction of the signals transmitted over the electrical cable 140 in the frequency domain, with the telephony signal occupying the low-frequency portion of the spectrum and the VDSL signal occupying the spectrum up to a maximum frequency of about 17 MHz. Figure 4b shows a schematic depiction of the signals transmitted over the home wiring 240 in the frequency domain with the telephony signal occupying the same low-frequency portion of the spectrum and the home networking data signal occupying the spectrum from around 17MHz up to a maximum of 30-50 MHz.

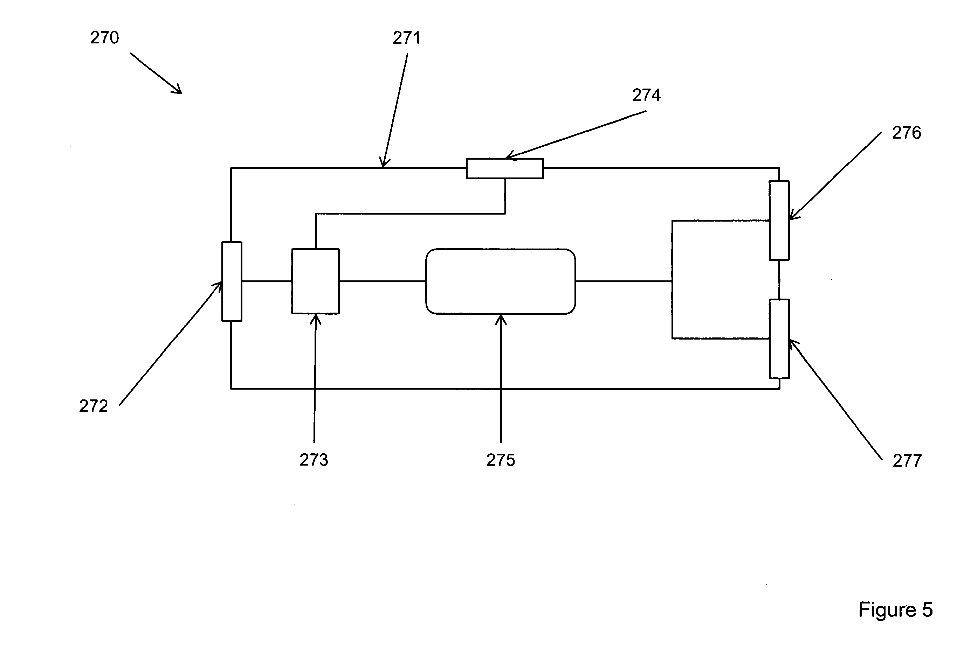

The router 230 may be modified by incorporating the router home networking transceiver 270 within the router. However, in order to allow the present invention to be used with existing routers it is preferred to provide the router home networking transceiver as a separate apparatus. Figure 5 shows a schematic depiction of the router home networking transceiver 270 which comprises a housing 271, home wiring interface 272, splitter 273, telephony port 274, home networking transceiver 275, power port 276 and data port 277. The home wiring interface 272 enables the router home networking transceiver to be connected to the home wiring and the splitter 273 separates the received signal such that the telephony signals are routed to the telephony port 274 and the home networking data signal is routed to the home networking transceiver 275. The telephony port enables a telephone to be connected to the home wiring (and thus onwards to the access network) such that telephone calls can be made (and received). The home networking transceiver receives the home networking data signal and decodes it such that the data can be routed to the data port 277 and on to the router so that it can be forwarded to the communication devices. The power port 276 may be connected to a mains-connected power supply, or alternatively electrical power may be received from the router. For example, if the router supports Power over Ethernet (PoE) then it may be possible for a single Ethernet port to comprise both the power port 276 and the data port 277. Similarly, if the router supports USB 3.0, then, depending upon the power consumption of the transceiver it may be possible for a single USB 3.0 port to comprise both the power port 276 and the data port 277. Other options include using a USB 2.0 port as the power port 276 and an Ethernet port as the data port 277. In a further alternative the transceiver may be powered by a conventional power supply. The person skilled in the art will be aware that there are many different possible alternatives for the configuration of the power port and the data port.

In an alternative to the embodiment described above with reference to Figure 3, the enhanced NTE may also comprise one or more Ethernet ports 340. These may support Fast Ethernet but preferably support Gigabit Ethernet as Fast Ethernet can only support data rates of up to 100Mbps whereas Gigabit Ethernet can support data rates of up to 1Gbps. The one or more Ethernet ports are connected to the output of the VDSL SOC.

In the applicant's network, the NTE currently being installed is as described in GB-B-2 445 212. In use, when upgrading an existing ADSL connection to a VDSL connection, the existing NTE faceplate will be removed and an NTE according to the present invention will be attached to the wall mounted backplate. As NTEs are commonly located just above skirting boards and next to, or near to, electrical power sockets, the form factor of an NTE according to the present invention is likely to have to extend upwards vertically to avoid interfering with the skirting board and/or other sockets. As the new NTE comprises the VDSL modem, this provides a less cluttered installation for the user. Furthermore, as the NTE only needs to be connected to the router by conventional internal telephone wiring (which in the UK comprises two or three wires), the cabling is physically smaller than the Cat 5 cable that would be used conventionally to connect a discreet VDSL modem to the router. A consequence of this is that the internal wiring can be installed along skirting boards and around door frames etc. in a much less obtrusive manner. As many domestic premises already have internal wiring installed, this means that this can be re-used to transmit data from the NTE to the router. A yet further advantage is that the operatives performing the installation will already be skilled in the installation of such internal wiring so there is no need to provide any further training to enable them to install data cabling. This also simplifies the provisioning of cables, connectors, crimping tools, etc. and reduces the number of items that an installer needs to take to a job.

In summary, the present invention provides an improved network termination equipment (NTE). The NTE of the present invention comprises a VDSL modem such that telephony signals and data signals can be transmitted together over conventional telephone wiring, without the need to install data grade cabling. This makes installation of super-fast broad band services faster and cheaper and makes them less visually intrusive.

## Claims

1. A network termination apparatus (300) comprising:
a network interface (305) configured to, in use, receive a telephony signal and a data signal;
a splitter (310) configured, in use, to
i) separate the telephony signal from the data signal;
ii) route the telephony signal to an internal wiring interface (315);
iii) route the data signal to a first data modem (325);
the first data modem (325) being configured, in use, to demodulate the received data signal;
**characterised in that**, in use, the telephony signal and the output of the first data modem are combined at the internal wiring interface such that they are transmitted together.

2. A network termination apparatus (300) according to Claim 1, wherein the apparatus further comprises a second data modem (335), the second data modem being arranged to
i) receive the output of the first data modem; and
ii) modulate the output received from first data modem before transmitting the modulated signal to the internal wiring interface (315) for combination with the telephony signal.

3. A network termination apparatus (300) according to Claim 2, wherein the first data modem (325) and the second data modem (335) use different modulation schemes.

4. A network termination apparatus (300) according to Claim 3, wherein the first data modem (325) comprises a VDSL modem and the second data modem (335) comprises a home networking protocol modulator.

5. A method of transmitting signals, the method comprising the steps of:
a) receiving a telephony signal and a data signal from a communications network;
b) separating the telephony signal from the data signal such that:
i) the telephony signal is routed to an internal wiring interface;
ii) the data signal is routed to a first data modem;
c) demodulating the received data signal at the first data modem; the method being **characterised by** the further step of;
d) combining the telephony signal and the output of the first data at the internal wiring interface such that they are transmitted together.

6. A method according to Claim 5 wherein the method comprises the further steps of;
e) receiving the output of the first data modem at a second data modem;
f) modulating the output of the first data modem with the second data modem, steps e) and f) being carried out after step c) and before step d).

7. A communications network comprising:
a network cable (140), a network terminating apparatus (300), internal wiring (240) and a router (230), wherein in use;
a telephony signal and a data signal are transmitted over the network cable to the network terminating apparatus, the network terminating apparatus comprising a first data modem;
the network terminating apparatus being configured to:
a) separate the telephony signal from the data signal;
b) demodulate the data signal using a first data modem;
c) transmit the telephony signal with the output of the first data modem over the internal wiring to the router.

8. A communications network according to Claim 7, where the network terminating apparatus further comprises a second data modem, the network terminating apparatus being further configured to modulate the output of the first data modem before it is transmitted over the internal wiring to the router.

9. A communications network according to Claim 7, wherein the router comprises a splitter to separate the telephony signal from the output of the first data modem.

10. A communications network according to Claim 8, wherein the router comprises a splitter to separate the telephony signal from the output of the first data modem and a data modem to demodulate the output of the first data modem

11. A transceiver (270) for use with a modem (230), the transceiver (270) comprising:
a network interface (272) to receive the internal wiring (240);
a splitter (273) configured, in use, to
i) route the telephony signal to a telephony port (274); and
ii) route the data signal to a data modem (275).

12. A transceiver (270) according to Claim 11 wherein the data modem is connected to a data port (277) and a power port (276).

13. A transceiver (270) according to Claim 11, wherein one or more of the data port (277) and the power port (276) are connected to a router (230).
